# EUROPÄISCHE PATENTSCHRIFT

(11) **EP 3 339 601 B1**
(45) Veröffentlichungstag und Bekanntmachung des Hinweises auf die Patenterteilung: **07.06.2023**
(21) Anmeldenummer: 17202946.4
(22) Anmeldetag: 22.11.2017
(51) Int. Cl.: F02B 37/18, F01N 13/10, F01N 13/08, F01N 13/18, F01D 17/00, F02B 37/22, B22D 25/02

(54) **TURBOLADERBAUGRUPPE**
TURBOCHARGER ASSEMBLY
ENSEMBLE TURBOCOMPRESSEUR

(30) Priorität: 22.12.2016 DE 102016015306
(43) Veröffentlichungstag der Anmeldung: 27.06.2018
(73) Patentinhaber: MAN Truck & Bus SE, 80995 München (DE)
(72) Erfinder: Leitel, Thomas, 91126 Schwabach (DE); Polster, Dominik, 92348 Berg (DE)
(74) Vertreter: v. Bezold & Partner Patentanwälte - PartG mbB

(56) Entgegenhaltungen:
- EP-A1- 1 574 681
- EP-A2- 0 477 579
- WO-A1-2013/142090
- WO-A1-2014/095003
- WO-A1-2015/145498
- DE-A1- 19 503 748
- US-B1- 6 202 413

## Beschreibung

Die Erfindung betrifft eine Vorrichtung zur Abgasführung, insbesondere eine Turboladerbaugruppe, für einen Verbrennungsmotor. Die Erfindung betrifft ferner ein Kraftfahrzeug, insbesondere ein Nutzfahrzeug, mit einer Turboladerbaugruppe.

Zur Leistungs- oder Effizienzsteigerung von Verbrennungsmotoren können Turbolader bzw. Abgasturbolader (ATL) eingesetzt werden. Ein Turbolader weist einen Verdichter für Einlassluft und eine Abgasturbine auf. Der Verdichter ist im Luftansaugsystem des Verbrennungsmotors zur Erhöhung des Luftdurchsatzes und zur Verminderung der Ansaugarbeit der Kolben des Verbrennungsmotors integriert. Der Verdichter des Turboladers wird von der Abgasturbine angetrieben. Im Einzelnen treibt ein Turbinenrad der Abgasturbine ein Verdichterrad des Verdichters mittels einer sich mit dem Turbinenrad drehenden Welle an. Im Betrieb durchströmen heiße Abgase aus den Verbrennungskammern des Verbrennungsmotors das Turbinenrad der Abgasturbine und treiben dieses dadurch an. Stromabwärts des Turbinenrads ist ein Diffusor im Turbinengehäuse zur Verbesserung der Abströmung des Abgases aus dem Turbinenrad vorgesehen. Durch den Einsatz des Diffusors kann der Wirkungsgrad der Abgasturbine verbessert werden. Der Diffusor kann als ein Bereich des Turbinengehäuses gegossen sein. Das heißt, das die Abgasturbine durchströmende Abgas bedingt eine darauf abgestimmte Konstruktion des thermisch hoch belasteten Turbinengehäuses.

DE 195 03 748 A1 offenbart einen in der Abgasleitung eines Verbrennungsmotor angeordneten Abgasturbolader, wobei am Ausgang der Turbine des Abgasturboladers ein Diffusor angeordnet ist und welcher eine Bypassleitung aufweist, die die Abgasleitung mit dem Diffusor verbindet.

EP 1 574 681 A1 offenbart eine Abgasturbine mit einem unmittelbar an den Turbinenradausgang anschließendem Abgasrohr, welches einen Abgasdiffusor und -krümmer aufweist.

WO 2015/145498 A1 offenbart ein Abgasreinigungssystem eines internen Verbrennungsmotors mit Turbolader, wobei die Abgasausgangspassage direkt an die Turbinenausgangspassage anschließt.

WO 2014/095003 A1 offenbart einen Abgasführungsabschnitt für eine Turbine mit unmittelbar an den Radaustritt anschließenden Diffusor und einen ebenfalls unmittelbar am Radau stritt positionierten Umgehungskanal, durch welchen ein Teil des Strömungsfluids das Turbinenrad umgehen kann.

US 6 202 413 B1 offenbart Düsen für eine Turbomaschine, wobei die Durchführungen der Bypass-Abgasführung vor einem Diffusor angeordnet sind.

In beengten Einbausituationen kann es notwendig sein, einen Abgaskrümmer mit einem Auslass der Turbine des Turboladers zu verbinden. Der Abgaskrümmer ermöglicht eine Umlenkung der Strömungsrichtung des Abgases zur Einleitung in weitere Komponenten des Abgassystems, z. B. Module zur Abgasnachbehandlung.

Die Diffusorlänge ist durch die Integration in das Turbinengehäuse begrenzt. Zudem wirkt sich ein längerer Diffusor und somit ein größeres und längeres Turbinengehäuse hinsichtlich des Bauraums und der Anordnung von stromabwärts vorgesehen Komponenten des Abgasstrangs negativ aus. Insbesondere kann es notwendig sein, einen stromabwärts vorgesehenen Abgaskrümmer mit einem kleineren Biegeradius vorzusehen, d. h. den Abgaskrümmer stärker zu krümmen. Ein Abgaskrümmer mit kleinerem Biegeradius wirkt sich negativ auf die Abströmung aus der Abgasturbine aus und kann die Effizienz der Abgasturbine verringern.

Es ist daher eine Aufgabe der Erfindung, eine Vorrichtung zur Abgasführung mit einem Turbolader, einem Diffusor und einem Abgaskrümmer vorzusehen, die eine verbesserte Nutzung des begrenzten Bauraums und insbesondere einen großen Biegeradius des Abgaskrümmers ermöglicht, um den Turboladerwirkungsgrad zu erhöhen. Eine weitere Aufgabe der Erfindung kann darin gesehen werden, eine verbesserte Gestaltung des thermisch hoch belasteten Turbinengehäuses zu ermöglichen, ohne die Gasströmung durch das Turbinengehäuse negativ zu beeinflussen.

Diese Aufgaben werden durch eine Vorrichtung zur Abgasführung, insbesondere eine Turboladerbaugruppe, mit den Merkmalen des unabhängigen Anspruchs gelöst. Vorteilhafte Ausführungsformen und Anwendungen der Erfindung ergeben sich aus den abhängigen Ansprüchen.

Die Turboladerbaugruppe weist einen Turbolader (Abgasturbolader) mit einem Turbinengehäuse auf. Das Turbinengehäuse kann Teil eines Turboladergehäuses sein, das zusätzlich ein Verdichtergehäuse aufweist. Das Turbinengehäuse kann ein Gussteil sein und ein drehbares Turbinenrad aufnehmen, das über eine Welle mit einem Verdichterrad antreibend verbunden ist.

Die Turboladerbaugruppe weist ferner ein Abgasrohr auf. Das Abgasrohr ist stromabwärts vom Turbinengehäuse angeordnet. Das Abgasrohr umfasst einen Diffusorbereich und einen Abgaskrümmerbereich. Das Abgasrohr kann ein Abgaskrümmer sein, in den ein Diffusor integriert ist. Der Diffusor (-bereich) ist durch eine Vergrößerung des Abgasrohrquerschnittes, d. h. des Durchflussquerschnittes, in Fließrichtung des strömenden Mediums, d. h. des Abgases, definiert. Der Abgaskrümmer (-bereich) ist durch eine gekrümmte Bauform definiert, die eine Strömungsrichtungsänderung des strömenden Mediums entlang der gekrümmten Bauform des Abgaskrümmers zur Folge hat.

Das erfindungsgemäße Vorsehen des Diffusorbereichs im Abgasrohr bietet den besonderen Vorteil, dass der Diffusorbereich unabhängig vom Turbinengehäuse ausgebildet wird. Damit können Beschränkungen hinsichtlich der Konstruktion des Turbinengehäuses, die aus der bisher notwendigen Integration des Diffusors in das Turbinengehäuse resultierten, abgebaut werden. Als eine Folge kann das thermisch hoch belastete Turbinengehäuse optimaler gestaltet werden, ohne Kompromisse bezüglich der Gasströmung stromabwärts des Turbinenrads einzugehen. Zudem kann die Länge des Diffusorbereichs durch das Vorsehen im Abgasrohr vorzugsweise vergrößert werden, ohne eine Vergrößerung des Turbinengehäuses zur Folge zu haben. Das Turbinengehäuse kann beispielsweise einen in unmittelbarer Nähe zum Turbinenrad vorgesehenen Flanschbereich zum Anflanschen des Abgasrohrs aufweisen.

Der Diffusorbereich erstreckt sich mindestens teilweise in das Turbinengehäuse hinein. Besonders vorteilhaft ist hierbei, wenn sich der Diffusorbereich im Wesentlichen vollständig in das Turbinengehäuse hinein erstreckt. Zur Aufnahme des Diffusorbereichs des Abgasrohrs kann das Turbinengehäuse einen (Rohr-) Aufnahmebereich aufweisen, der sich von einer Auslassöffnung des Turbinengehäuses in das Turbinengehäuse hinein erstreckt. Somit kann eine zumindest bauraumneutrale, gegebenenfalls bauraumoptimierte Anordnung von Turbinengehäuse, Diffusor und Abgaskrümmer gewährleistet werden. Eine derartige Konstruktion ermöglicht zudem den Einsatz der Erfindung ohne aufwändige Anpassung des Turbinengehäuses und des Abgasrohrs. Anstelle des Diffusors wird im Turbinengehäuse ein Aufnahmebereich zum mindestens teilweisen Aufnehmen des Diffusorbereichs des Abgasrohrs vorgesehen. Das Abgasrohr kann am Flanschbereich zum Turbinengehäuse um den Diffusorbereich verlängert werden, sodass es sich mit dem Diffusorbereich in das Turbinengehäuse hinein erstreckt. Ferner ermöglicht dieses Ausführungsbeispiel insbesondere bei geringen Platzverhältnissen, dass der Abgaskrümmerbereich mit einem sanften, d. h. großen, Biegeradius und somit strömungsoptimiert vorgesehen werden kann. Ein großer Biegeradius verbessert die Abströmung aus der Turbine und somit die Turboladereffizienz.

Gemäß einer weiteren Ausführungsvariante ist das Abgasrohr einstückig ausgebildet. Folglich erhöht sich die Teileanzahl nicht. Weiterhin wird lediglich ein Turbinengehäuse und ein Abgasrohr bzw. Abgaskrümmer benötigt. Die einstückige Ausbildung ermöglicht zudem eine Integration des Diffusorbereichs und des Abgaskrümmerbereichs. Zum Beispiel können sich die Bereiche (teilweise oder vollständig) überlappen, oder ein optimierter Übergang zwischen den Bereichen kann vorgesehen werden. Zusätzlich wird die Montage erleichtert, da der Diffusorbereich und der Abgaskrümmerbereich gemeinsam bei der Montage des Abgasrohrs montiert werden.

Alternativ oder zusätzlich kann das Abgasrohr ein Gussteil sein, sodass insbesondere die Innengeometrie des Abgasrohrs, die den Diffusorbereich und den Abgaskrümmerbereich definiert, auf einfache Weise durch ein Gießverfahren ausgebildet wird. Das Gussteil kann beispielsweise aus einem Gusseisen bestehen.

Erfindungsgemäß weist die Turboladerbaugruppe einen Wastegatekanal auf, der mindestens einen Durchlass, vorzugsweise mehrere Durchlässe, aufweist. Der oder die Durchlässe erstrecken sich durch eine Rohrwand des Abgasrohrs zwischen einer Außenumfangsfläche des Abgasrohrs und einer Innenumfangsfläche des Abgasrohrs. Der oder die Durchlässe dienen als Auslassbereiche des Wastegatekanals. Der stromaufwärts von dem mindestens einen Durchlass vorgesehene Bereich des Wastegatekanals erstreckt sich durch das Turbinengehäuse. Der Wastegatekanal ist ein Kanal (Bypasskanal) zur Umgehung des Turbinenrads, der sich von einem Einlass stromaufwärts des Turbinenrads zu einem Auslass stromabwärts des Turbinenrads erstreckt. Im Wastegatekanal kann ein Wastegateventil oder eine -klappe zum Öffnen, Verschießen und teilweisen Öffnen des Wastegatekanals angeordnet sein.

Ferner ist der mindestens eine Durchlass stromabwärts von dem Diffusorbereich und/oder stromaufwärts von dem Abgaskrümmerbereich vorgesehen. Insbesondere ist eine Auslassöffnung des mindestens einen Durchlasses stromabwärts von dem Diffusorbereich und/oder stromaufwärts von dem Abgaskrümmerbereich vorgesehen. Damit wird gewährleistet, dass beim Einströmen des Abgases aus dem oder den Durchlässen in das Abgasrohr keine oder nur eine geringe Beeinträchtigung (Störung) der durch den Diffusorbereich und/oder oder den Abgaskrümmerbereich strömenden Abgasströmung auftritt.

In einem weiteren Ausführungsbeispiel ist der mindestens eine Durchlass so ausgebildet, dass eine Strömung durch den Durchlass so in das Abgasrohr eingeleitet wird, dass die Strömung aus dem Durchlass in einem Winkel kleiner als 90° auf eine Strömung durch das Abgasrohr trifft. Mit anderen Worten ist der Einströmwinkel aus dem oder den Durchlässen kleiner als 90°. Hierdurch werden die beim Einströmen aus dem Durchlass in das Abgasrohr entstehenden Verwirbelungen verringert. Vorzugsweise ist der genannte Winkel kleiner als 45°, insbesondere kleiner als 25°, sodass sich die Strömung aus dem Durchlass besonders gut an die Strömung im Abgasrohr anschmiegen bzw. anlegen kann. Der oder die Durchlässe können zudem in Düsenform bzw. als Düsen des Wastegatekanals ausgebildet sein.

Vorzugsweise sind eine Mehrzahl von Durchlässen des Wastegastekanals durch die Rohrwand des Abgasrohrs vorgesehen. Diese sind insbesondere in gleichen Abständen in einer Umfangsrichtung um eine Längsachse des Abgasrohrs angeordnet. Dies ermöglicht eine symmetrische Einströmung aus dem Wastegatekanal in das Abgasrohr. Es sind aber auch unsymmetrische Anordnungen von mehreren Durchlässen in einer Umfangsrichtung um eine Längsachse des Abgasrohrs denkbar, insbesondere in Ausführungsformen, in denen die Auslassöffnungen im Abgaskrümmerbereich angeordnet sind. Der Wastegatekanal kann einen Ringkanalabschnitt bzw. Ringraum aufweisen, der stromaufwärts der Durchlässe angeordnet ist. Der Ringkanalabschnitt kann eine möglichst gleichmäßige Einströmung in die Durchlässe ermöglichen. Der Ringkanalabschnitt kann zwischen dem Turbinengehäuse und dem Abgasrohr ausgebildet sein. Eine Außenumfangsfläche des Abgasrohrs kann zumindest teilweise eine Innenumfangsfläche (Mantelinnenfläche) des Ringkanalabschnitts bilden. Eine Innenumfangsfläche des Turbinengehäuses kann zumindest teilweise eine Außenumfangsfläche (Mantelaußenfläche) des Ringkanalabschnitts bilden.

Vorteilhafterweise wird eine Einlassöffnung des mindestens einen Durchlasses durch ein spanabhebendes Verfahren ausgebildet. Beispielsweise kann die Einlassöffnung durch Drehen gebildet werden. So ist es möglich, dass die Einlassöffnung des Durchlasses nach dem Urformverfahren, z. B. Gießen, noch nicht vorhanden ist. Erst das spanabhebende Verfahren "öffnet" den Durchlass eingangsseitig. Beispielsweise kann die Einlassöffnung durch Plandrehen, Runddrehen, Profildrehen und Formdrehen ausgebildet werden.

Zusätzlich oder alternativ wird eine Auslassöffnung des mindestens einen Durchlasses durch ein Gussverfahren ausgebildet. Die Auslassöffnung wird somit bereits beim Urformen erstellt und muss nicht auf aufwändige Weise im Inneren des Abgasrohrs durch ein spanabhebendes Verfahren nach dem Urformen hergestellt werden. Das Gießen erlaubt zudem besonders geschmeidige Strukturen der Auslassöffnung. Der Durchlass kann über die durch ein Gussverfahren ausgebildete Auslassöffnung gleichmäßig bzw. eben in eine Innenumfangsfläche des Abgasrohrs übergehen.

Gemäß einer weiteren Ausführungsform überlappen sich der Diffusorbereich und der Abgaskrümmerbereich mindestens teilweise, z. B. im Wesentlichen vollständig. Im Überlappungsabschnitt ist der Diffusorbereich gekrümmt. Dies kann beispielsweise eine Verlängerung des Diffusors und eine Bauraumoptimierung ermöglichen. Der Überlappungsabschnitt zwischen Diffusorbereich und Abgaskrümmerbereich kann im Turbinengehäuse oder außerhalb des Turbinengehäuses vorgesehen sein. Der Diffusorbereich kann sich alternativ oder zusätzlich mindestens teilweise geradlinig erstrecken. Der geradlinige Abschnitt kann insbesondere im Turbinengehäuse angeordnet sein.

Erfindungsgemäß weist das Abgasrohr ferner einen Flanschbereich auf. Der Flanschbereich ist dazu ausgebildet, das Abgasrohr am Turbinengehäuse anzuflanschen. Der Flanschbereich ist stromabwärts von einer Einlassöffnung des Abgasrohrs, stromabwärts von dem Diffusorbereich und stromaufwärts von dem Abgaskrümmerbereich angeordnet. Der Flanschbereich kann sich teilweise, abschnittsweise oder vollständig um einen Außenumfang des Abgasrohrs erstrecken. Der Flanschbereich kann sich kragenförmig in Umfangsrichtung und radial nach außen erstrecken. Der Flanschbereich kann eine Flanschstirnfläche aufweisen, die als Ringfläche ausgebildet ist. Das Turbinengehäuse kann eine entsprechend ausgebildete Ringfläche zum Kontaktieren der Flanschstirnfläche aufweisen. Der Flanschbereich des Turbinengehäuses und der Flanschbereich des Abgasrohrs können über einen ringförmigen Körper, beispielsweise eine Flanschschelle oder ein Klemmband, abdichtend verbunden werden.

Zusätzlich kann sich der mindestens eine Durchlass zumindest teilweise durch den Flanschbereich erstrecken. Der Flanschbereich bietet durch seine Materialstärke (d. h. Rohrdicke des Abgasrohrs im Flanschbereich) die Möglichkeit, einen strömungsoptimierten Verlauf des Durchlasses insbesondere im Hinblick auf das Einströmen in das Abgasrohr zu ermöglichen. Der Flanschbereich kann beispielsweise stufenförmig ausgebildet sein. Die Einlassöffnung des Durchlasses kann in einer sich bezüglich einer Längsachse des Abgasrohrs radial nach außen erstreckenden Ringfläche des Flanschbereichs vorgesehen sein. Alternativ oder zusätzlich kann die Einlassöffnung beispielsweise in einer sich koaxial zur Längsachse des Abgasrohrs erstreckenden Umfangsfläche des Flanschbereichs vorgesehen sein. Somit können die Einlassöffnungen gleichzeitig mit der Bearbeitung des Flanschbereichs beispielsweise durch ein spanabhebendes Verfahren wie Drehen hergestellt werden.

Die Erfindung betrifft weiterhin ein Kraftfahrzeug, insbesondere ein Nutzfahrzug, mit einer Vorrichtung zur Abgasführung, insbesondere einer Turboladerbaugruppe, wie hierin offenbart.

Gemäß einem weiteren Gesichtspunkt der Erfindung kann ein Turbolader alleine (d. h. ohne Abgasrohr) vorsehen sein. Der Turbolader weist ein Turbinengehäuse mit einem Rohraufnahmebereich auf. Der Rohraufnahmebereich ist zur Aufnahme eines Rohres ausgebildet, sodass sich das Rohr zumindest teilweise in das Turbinengehäuse hinein erstreckt. Der Rohraufnahmebereich kann stromabwärts von einem Turbinenrad vorgesehen sein und beispielweise einen Diffusor, zum Beispiel in Form eines Diffusorrohrs, eines Diffusorrohrsegments oder eines Diffusorbereichs eines Abgasrohrs, aufnehmen. Zusätzlich oder alternativ kann der Rohraufnahmebereich auch stromaufwärts von einem Turbinenrad des Abgasturboladers vorgesehen sein. Ein solcher Turbolader löst insbesondere die Aufgabe zur Verbesserung der Gestaltung des thermisch hoch belasteten Turbinengehäuses.

Gemäß einem weiteren anderen Gesichtspunkt der Erfindung kann ebenfalls ein Abgasrohr wie hierin offenbart alleine (d. h. ohne Turbolader) vorgesehen sein. Das Abgasrohr weist einen Diffusorbereich und einen Abgaskrümmerbereich auf. Der Diffusorbereich kann dazu ausgebildet sein, sich in ein Turbinengehäuse eines Turboladers hinein zu erstrecken. Das Abgasrohr kann einstückig und/oder als Gussteil vorgesehen sein. Das Abgasrohr kann wie hierin offenbart ausgebildet sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Draufsicht auf eine Turboladerbaugruppe;
- Figur 2: eine Schnittansicht eines Abgasrohrs und eines Auslassbereichs eines Turbinengehäuses eines Turboladers;
- Figur: 3A eine Vorderansicht des Abgasrohrs; und
- Figur: 3B eine Seitenansicht des Abgasrohrs.

Die Figur 1 zeigt eine als Turboladerbaugruppe 10 ausgebildete Vorrichtung zur Abgasführung. Die Turboladerbaugruppe 10 weist einen Turbolader 11 mit einem Verdichter 12 und einer Turbine 14 auf. Die Turboladerbaugruppe 10 weist ferner ein Abgasrohr 16 auf.

Der Verdichter 12 ist Teil eines Lufteinlasssystems eines Verbrennungsmotors (nicht gezeigt). Der Verdichter 12 umfasst ein Verdichtergehäuse 18 und ein im Verdichtergehäuse 18 drehbar gelagertes Verdichterrad (nicht gezeigt) zum Verdichten der Einlassluft. Die Einlassluft strömt an einer Verdichtereinlassöffnung 18A in den Verdichter 12 ein und wird darin von dem Verdichterrad verdichtet. Die verdichtete Einlassluft verlässt den Verdichter 12 durch eine Verdichterauslassöffnung 18B. Das Verdichterrad wird von einer Welle angetrieben, die wiederum von einem Turbinenrad der Turbine 14 angetrieben wird.

Das Turbinenrad der Turbine 14 ist in einem Turbinengehäuse 20 drehbar gelagert. Das Turbinenrad wird durch heißes Abgas, das sich gegen die Schaufeln des Turbinenrads entspannt, angetrieben. Die Turbine 14 ist Teil eines Abgassystems des Verbrennungsmotors.

Die Turbine 14 ist stromabwärts der Verbrennungskammer(n) des Verbrennungsmotors angeordnet. Heiße Abgase strömen in die Turbine 14 durch eine Turbineneinlassöffnung 20A ein und durchströmen das Turbinenrad. Nach dem Durchströmen des Turbinenrads strömen die Abgase in das Abgasrohr 16 ein.

Das Abgasrohr 16 ist stromabwärts von der Turbine 14 bzw. dem Turbinengehäuse 20 angeordnet. Das Abgasrohr 16 ist als Abgaskrümmer ausgebildet und dient zur Umlenkung der Abgasströmung aus der Turbine 14. Das Abgasrohr 16 kann eine Bremsklappe (Drosselklappe) aufweisen.

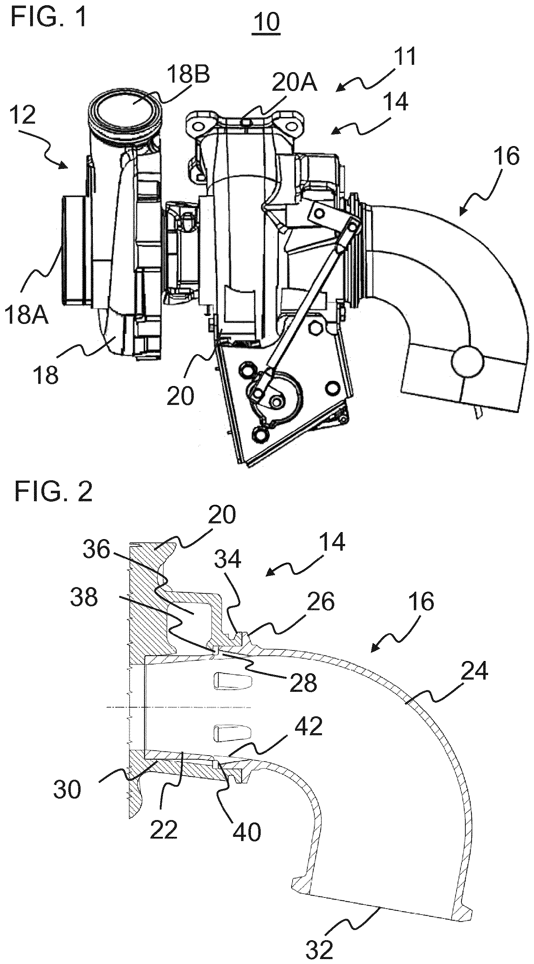

Wie in der Figur 2 gezeigt ist, erstreckt sich das Abgasrohr 16 teilweise in das Turbinengehäuse 20 hinein. Im Einzelnen weist das Abgasrohr 16 einen Diffusorbereich 22, einen Abgaskrümmerbereich 24, einen Flanschbereich 26 und eine Mehrzahl von Durchlässen 28 auf. Im gezeigten Ausführungsbeispiel ist das Abgasrohr 16 einstückig als ein Gussteil ausgebildet. Das Abgasrohr 16 kann auch aus mehreren Rohrsegmenten bestehen, beispielsweise einem Diffusorrohrsegment und einem Abgaskrümmerrohrsegment, die z. B. über einen Flansch miteinander verbunden sind.

Der Diffusorbereich 22 ist im Wesentlichen vollständig in einem Abgasrohraufnahmebereich 30 des Turbinengehäuses 20 vorgesehen. Der Diffusorbereich 22 ist durch eine Querschnittserweiterung entlang der Strömungsrichtung gekennzeichnet. Der Diffusorbereich 22 ist direkt stromabwärts des Turbinenrads vorgesehen. Im gezeigten Beispiel erstreckt sich der Diffusorbereich 22 geradlinig. In anderen Ausführungsbeispielen kann der Diffusorbereich 22 gekrümmt sein und sich insbesondere mit dem Abgaskrümmerbereich 24 überlappen. Der Diffusorbereich 22 kann sich auch mindestens teilweise außerhalb des Turbinengehäuses 20 erstrecken.

Der Abgaskrümmerbereich 24 ist stromabwärts vom Diffusorbereich 22 vorgesehen. Der Abgaskrümmerbereich 24 ist durch einen Biegeradius gekennzeichnet, durch den die Strömung im Abgaskrümmerbereich 24 umgelenkt wird. An eine Auslassöffnung 32 des Abgaskrümmerbereichs 24 bzw. des Abgasrohrs 16 können beispielsweise Module zur Abgasnachbehandlung usw. angeflanscht werden.

Das Abgasrohr 16 ist über den Flanschbereich 26 mit einem Flanschbereich 34 des Turbinengehäuses 20 verbunden. Ein nicht gezeigter ringförmiger (Band-) Körper befestigt das Abgasrohr 16 am Turbinengehäuse 20 durch Umgreifen beider Flanschbereiche 26, 34. Der Flanschbereich 26 des Abgasrohrs 16 ist stromabwärts des Diffusorbereichs 22 und stromaufwärts des Abgaskrümmerbereichs 24 angeordnet. Der Flanschbereich 26 erstreckt sich kragenförmig um eine Außenumfangsfläche des Abgasrohrs 16. Im Einzelnen weist der Flanschbereich 26 eine stufenförmige Struktur auf. In einem radial inneren Abschnitt des Flanschbereichs 26 erstrecken sich die Durchlässe 28 durch die Rohrwand des Abgasrohrs 16.

Die Durchlässe 28 erstrecken sich zwischen einer Außenumfangsfläche des Abgasrohrs 16 und einer Innenumfangsfläche des Abgasrohrs 16. Die Durchlässe 28 bilden den Auslassbereich bzw. die Auslassdüsen eines nur teilweise dargestellten Wastegatekanals 36 der Turbine 14 zum Umgehen des Turbinenrads. Der Wastegatekanal 36 weist ein Wastegateventil (nicht gezeigt) zum Dosieren eines Abgasstroms durch den Wastegatekanal 36 bzw. durch das Turbinenrad auf. Im Einzelnen weist der Wastegatekanal 36 einen Ringraum 38 auf, durch den das Abgas in die Einlassöffnungen 40 der Durchlässe 28 einströmt. Der Ringraum 38 wird durch eine Außenumfangsfläche des Abgasrohrs 16 um den Diffusorbereich 22 und eine Innenumfangsfläche des Turbinengehäuses 20 definiert bzw. begrenzt. Das Abgas verlässt die Durchlässe 28 und somit den Wastegatekanal 36 durch die Auslassöffnungen 42. Die Auslassöffnungen 42 sind im hinteren Abschnitt des Diffusorbereichs 22 stromaufwärts des Abgaskrümmerbereichs 24 angeordnet. Die Auslassöffnungen 42 können beispielsweise auch stromabwärts des Diffusorbereichs 22 sowie im Abgaskrümmerbereich 24 angeordnet sein. In der gezeigten Ausführungsform bilden die Längsachsen der Durchlässe 28 mit einer Längsachse des Diffusorbereichs 16 jeweils einen spitzen Winkel, d. h. einen Winkel kleiner als 90°. Bevorzugt sind insbesondere kleine Einströmwinkel, z. B. kleiner als 45° oder 25°. Durch die Durchlässe 28 eintretendes Abgas bewirkt somit vergleichsweise geringe Verwirbelungen beim Einströmen in das Abgasrohr 16.

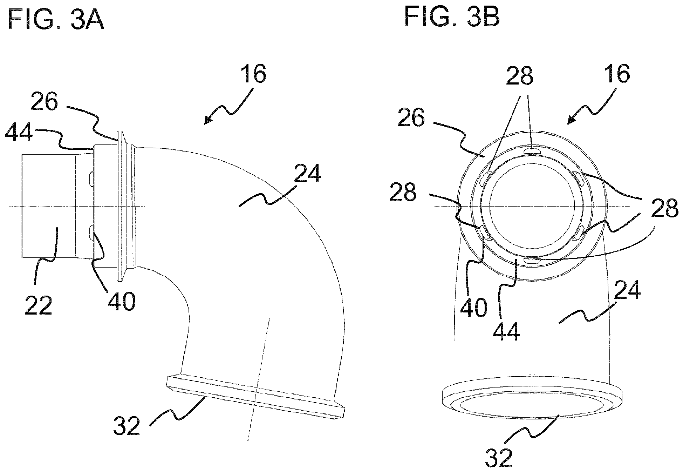

Wie den Figuren 3A und 3B entnommen werden kann, sind im gezeigten Ausführungsbeispiel insgesamt sechs Durchlässe 28 vorgesehen. Die sechs Durchlässe 28 sind symmetrisch in einer Umfangsrichtung um die Längsachse des Diffusorbereichs 22 angeordnet. In anderen Ausführungsformen kann das Abgasrohr 16 mehr oder weniger Durchlässe 28 in symmetrischen oder unsymmetrischen Anordnungen aufweisen. Die Einlassöffnungen 40 sind in einer Ringfläche 44, die in einer Ebene senkrecht zur Längsachse des Diffusorbereichs 22 liegt, positioniert. Die Einlassöffnungen 40 werden erst durch Plandrehen der Ringfläche 44 erzeugt. Mit anderen Worten werden die Durchlässe 28 beim Urformen, d. h. Gie-βen, noch nicht vollständig ausgebildet. Nach dem Urformen sind die Durchlässe 28 Sacklöcher, die sich von den Auslassöffnungen 42 in die Rohrwand des Abgasrohrs 16 erstrecken.

Durch ein spanabhebendes Verfahren, hier Plandrehen, werden die Durchlässe 28 beim Ausbilden der Ringfläche 44 geöffnet, d. h., die Einlassöffnungen 40 entstehen erst nach dem Urformen.

### Bezugszeichenliste

- 10: Turboladerbaugruppe
- 12: Verdichter
- 14: Turbine
- 16: Abgasrohr
- 18: Verdichtergehäuse
- 18A: Verdichtereinlassöffnung
- 18B: Verdichterauslassöffnung
- 20: Turbinengehäuse
- 20A: Turbineneinlassöffnung
- 22: Diffusorbereich
- 24: Abgaskrümmerbereich
- 26: Flanschbereich des Abgasrohrs
- 28: Durchlass
- 30: Abgasrohraufnahmebereich
- 32: Auslassöffnung des Abgasrohrs
- 34: Flanschbereich des Turbinengehäuses
- 36: Wastegatekanal
- 38: Ringraum
- 40: Einlassöffnung des Durchlasses
- 42: Auslassöffnung des Durchlasses
- 44: Ringfläche

## Patentansprüche

1. Turboladerbaugruppe (10) für einen Verbrennungsmotor, insbesondere eines Nutzfahrzeugs, aufweisend:
einen Turbolader (11) mit einem Turbinengehäuse (20),
ein Abgasrohr (16), das stromabwärts vom Turbinengehäuse (20) angeordnet ist und einen Diffusorbereich (22) und einen Abgaskrümmerbereich (24) aufweist, wobei der Abgaskrümmerbereich (24) durch eine gekrümmte Bauform definiert ist, die eine Strömungsrichtungsänderung des strömenden Mediums entlang der gekrümmten Bauform des Abgaskrümmerbereichs (24) zur Folge hat, wobei
einen Wastegatekanal (36), der mindestens einen Durchlass (28) durch eine Rohrwand des Abgasrohrs (16) aufweist, wobei der mindestens eine Durchlass (28) stromabwärts von dem Diffusorbereich (22) und stromaufwärts von dem Abgaskrümmerbereich (24) vorgesehen ist, **dadurch gekennzeichnet, dass** der Diffusorbereich (22) sich mindestens teilweise, insbesondere im Wesentlichen vollständig, in das Turbinengehäuse (20) hinein erstreckt, und
wobei das Abgasrohr (16) ferner einen Flanschbereich (26) zum Anflanschen des Abgasrohrs (16) an das Turbinengehäuse (20) aufweist, wobei der Flanschbereich (26) stromabwärts von einer Einlassöffnung des Abgasrohrs (16), stromabwärts von dem Diffusorbereich (22) und stromaufwärts von dem Abgaskrümmerbereich (24), angeordnet ist.

2. Turboladerbaugruppe (10) nach Anspruch 1, wobei das Abgasrohr (16) einstückig ausgebildet ist und/oder ein Gussteil ist.

3. Turboladerbaugruppe (10) einem der vorherigen Ansprüche, wobei der mindestens eine Durchlass (28) so ausgebildet ist, dass eine Strömung durch den Durchlass (28) so in das Abgasrohr (16) eingeleitet wird, dass die Strömung aus dem Durchlass (28) in einem Winkel kleiner als 90°, vorzugsweise kleiner als 45°, insbesondere kleiner als 25°, auf eine Strömung durch das Abgasrohr (16) trifft.

4. Turboladerbaugruppe (10) nach einem der vorherigen Ansprüche, wobei eine Mehrzahl von Durchlässen (28) des Wastegastekanals (36) durch die Rohrwand des Abgasrohrs (16) vorgesehen ist, die insbesondere in gleichen Abständen in einer Umfangsrichtung um eine Längsachse des Abgasrohrs (16) angeordnet sind.

5. Turboladerbaugruppe (10) nach einem der vorherigen Ansprüche, wobei eine Einlassöffnung (40) des mindestens einen Durchlasses (28) durch ein spanabhebendes Verfahren, insbesondere Drehen, ausgebildet wird und/oder eine Auslassöffnung (42) des mindestens einen Durchlasses (28) durch ein Gussverfahren ausgebildet wird.

6. Turboladerbaugruppe (10) nach einem der vorherigen Ansprüche, wobei der Diffusorbereich (22) und der Abgaskrümmerbereich (24) sich mindestens teilweise überlappen und/oder
der Diffusorbereich (22) sich im Wesentlichen geradlinig erstreckt.

7. Turboladerbaugruppe (10) nach einem der vorhergehenden Ansprüche, wobei der mindestens eine Durchlass (28) sich mindestens teilweise durch den Flanschbereich (26) erstreckt.

8. Kraftfahrzeug, insbesondere Nutzfahrzug, mit einer Turboladerbaugruppe (10) nach einem der vorherigen Ansprüche.

## Claims

1. Turbocharger assembly (10) for an internal combustion engine, preferably of a commercial vehicle, comprising:
a turbocharger (11) with a turbine housing (20),
an exhaust pipe (16) arranged downstream of the turbine housing (20) and having a diffuser portion (22) and an exhaust manifold portion (24), the exhaust manifold portion (24) being defined by a curved configuration that results in a change in flow direction of the flowing medium along the curved configuration of the exhaust manifold portion (24), wherein
a wastegate duct (36) comprising at least one passage (28) through a pipe wall of said exhaust pipe (16), said at least one passage (28) being provided downstream of said diffuser portion (22) and upstream of said exhaust manifold portion (24), **characterized in that** said diffuser portion (22) extends at least partially, in particular substantially completely, into said turbine housing (20), and
wherein the exhaust pipe (16) further comprises a flange portion (26) for flanging the exhaust pipe (16) to the turbine housing (20), the flange portion (26) being arranged downstream of an inlet opening of the exhaust pipe (16), downstream of the diffuser portion (22) and upstream of the exhaust manifold portion (24).

2. The turbocharger assembly (10) of claim 1, wherein the exhaust pipe (16) is integrally formed and/or is a casting part.

3. The turbocharger assembly (10) of any one of the preceding claims, wherein the at least one passage (28) is configured to introduce a flow through the passage (28) into the exhaust pipe (16) such that the flow from the passage (28) meets a flow through the exhaust pipe (16) at an angle less than 90°, preferably less than 45°, in particular less than 25°.

4. A turbocharger assembly (10) according to any one of the preceding claims, wherein a plurality of passages (28) of the waste gas channel (36) through the pipe wall of the exhaust pipe (16) are provided, preferably arranged at equal intervals in a circumferential direction around a longitudinal axis of the exhaust pipe (16).

5. A turbocharger assembly (10) according to any one of the preceding claims, wherein
an inlet opening (40) of the at least one passage (28) is formed by a machining process, in particular turning, and/or
an outlet opening (42) of the at least one passage (28) is formed by a casting process.

6. A turbocharger assembly (10) according to any one of the preceding claims, wherein
the diffuser area (22) and the exhaust manifold area (24) overlap at least partially and/or
the diffuser region (22) extends in a substantially straight line.

7. A turbocharger assembly (10) according to any one of the preceding claims, wherein the at least one passage (28) extends at least partially through the flange portion (26).

8. Motor vehicle, in particular commercial vehicle, with a turbocharger assembly (10) according to one of the previous claims.

## Revendications

1. Ensemble de turbocompresseur (10) pour un moteur à combustion interne, notamment d'un véhicule utilitaire, présentant :
un turbocompresseur (11) avec un carter de turbine (20), un tuyau de gaz d'échappement (16), qui est agencé en aval du carter de turbine (20) et présente une zone de diffuseur (22) et une zone de collecteur de gaz d'échappement (24), la zone de collecteur de gaz d'échappement (24) étant définie par une forme structurelle courbée, qui entraîne un changement de direction d'écoulement du fluide en écoulement le long de la forme structurelle courbée de la zone de collecteur de gaz d'échappement (24),
un canal de wastegate (36), qui présente au moins un passage (28) à travers une paroi de tuyau du tuyau de gaz d'échappement (16), l'au moins un passage (28) étant prévu en aval de la zone de diffuseur (22) et en amont de la zone de collecteur de gaz d'échappement (24),
**caractérisé en ce que** la zone de diffuseur (22) s'étend au moins partiellement, notamment essentiellement entièrement, dans le carter de turbine (20), et
dans lequel le tuyau de gaz d'échappement (16) présente en outre une zone de bride (26) pour brider le tuyau de gaz d'échappement (16) sur le carter de turbine (20), la zone de bride (26) étant agencée en aval d'une ouverture d'entrée du tuyau de gaz d'échappement (16), en aval de la zone de diffuseur (22) et en amont de la zone de collecteur de gaz d'échappement (24).

2. Ensemble de turbocompresseur (10) selon la revendication 1, dans lequel le tuyau de gaz d'échappement (16) est réalisé d'une seule pièce et/ou est une pièce coulée.

3. Ensemble de turbocompresseur (10) selon l'une quelconque des revendications précédentes, dans lequel l'au moins un passage (28) est réalisé de telle sorte qu'un courant est introduit dans le tuyau de gaz d'échappement (16) à travers le passage (28) de telle sorte que le courant provenant du passage (28) rencontre un courant à travers le tuyau de gaz d'échappement (16) à un angle inférieur à 90°, de préférence inférieur à 45°, notamment inférieur à 25°.

4. Ensemble de turbocompresseur (10) selon l'une quelconque des revendications précédentes, dans lequel une pluralité de passages (28) du canal de wastegate (36) à travers la paroi de tuyau du tuyau de gaz d'échappement (16) sont prévus, qui sont notamment agencés à intervalles égaux dans une direction circonférentielle autour d'un axe longitudinal du tuyau de gaz d'échappement (16).

5. Ensemble de turbocompresseur (10) selon l'une quelconque des revendications précédentes, dans lequel une ouverture d'entrée (40) de l'au moins un passage (28) est réalisée par un procédé d'usinage par enlèvement de copeaux, notamment par tournage, et/ou
une ouverture de sortie (42) de l'au moins un passage (28) est réalisée par un procédé de coulée.

6. Ensemble de turbocompresseur (10) selon l'une quelconque des revendications précédentes, dans lequel la zone de diffuseur (22) et la zone de collecteur de gaz d'échappement (24) se chevauchent au moins partiellement et/ou
la zone de diffuseur (22) s'étend de manière essentiellement rectiligne.

7. Ensemble de turbocompresseur (10) selon l'une quelconque des revendications précédentes, dans lequel l'au moins un passage (28) s'étend au moins partiellement à travers la zone de bride (26).

8. Véhicule automobile, notamment véhicule utilitaire, avec un ensemble de turbocompresseur (10) selon l'une quelconque des revendications précédentes.
